# EUROPEAN PATENT SPECIFICATION

(11) **EP 4 453 464 B1**
(45) Date of publication and mention of the grant of the patent: **14.10.2026**
(21) Application number: 22802726.4
(22) Date of filing: 04.11.2022
(51) Int. Cl.: F16L 55/07, F16L 37/56

(54) **HYDRAULIC CONNECTION GROUP WITH IMPROVED DECOMPRESSION SYSTEM**
HYDRAULISCHE VERBINDUNGSGRUPPE MIT VERBESSERTEM DEKOMPRESSIONSSYSTEM
GROUPE DE RACCORDEMENT HYDRAULIQUE DOTÉ D'UN SYSTÈME DE DÉCOMPRESSION AMÉLIORÉ

(30) Priority: 21.12.2021 IT 202100032018
(43) Date of publication of application: 30.10.2024
(73) Proprietor: FASTER S.r.l., 26027 Rivolta d'Adda (CR) (IT)
(72) Inventor: ROSSETTI, Daniele, 26025 PANDINO (CR) (IT); BALLOTTA, Sandro, 20068 PESCHIERA BORROMEO (MI) (IT); FOLETTI, Federico, 26020 AGNADELLO (CR) (IT); POLGATI, Igor, 26020 AGNADELLO (CR) (IT); RUSCONI, Paolo, 26027 RIVOLTA D'ADDA (CR) (IT)
(74) Representative: Bianchetti & Minoja with Trevisan & Cuonzo IPS SRL
(86) International application number: PCT/IB2022/060631
(87) International publication number: WO 2023/118993

(56) References cited:
- WO-A1-2004/070241
- US-A1- 2005 247 359
- US-A1- 2016 348 799

## Description

### FIELD OF THE INVENTION

The present invention relates to a hydraulic group for connecting the hydraulic circuit on board an operating machine to the hydraulic circuit of a utility with an improved decompression system.

The hydraulic group according to the present invention comprises a "pull" type decompression system, that is, it can be operated by the operator pulling the shaped stem of a decompression cartridge, so that single couplings can be inserted into the manifold of the hydraulic group.

### STATE OF THE ART

Hydraulic groups suitable for connecting the hydraulic circuit on board an operating machine to the hydraulic circuit of movable hydraulic equipment, or utilities are known from the state of the art. An example of use of these hydraulic connection groups is that of earth-moving machines, such as excavators or the like, which are provided with an on-board hydraulic circuit for driving the parts of the machine, and normally have the possibility of connecting said on-board circuit to movable oleodynamic equipment, such as pneumatic drills, milling cutters and the like, to the hydraulic circuit on board the operating machine by means of flexible pipes and quick couplings.

When the hydraulic circuit of the utility is disconnected, it usually remains full of oil and this generates a condition of potential danger if, as is usually the case, the equipment is left in a construction site after use, often exposed to the sun or, in any case, to the action of elements that can cause an increase in the internal temperature and, consequently, in the pressure of the oil inside the hydraulic circuit of the equipment.

This increase in pressure in the utility, in addition to being dangerous in itself as it can damage the equipment itself, is also disadvantageous and therefore to be avoided because it greatly increases the force that the user must apply to reconnect the hydraulic lines of the tool to the machine to the point of sometimes making it insurmountable. In general, in fact, this connection is made by means of one or more quick couplings that require the operator to connect the male coupling of the utility line to the corresponding female coupling (cartridge) inserted in the hydraulic connection group or manifold provided on the machine, by means of a pressure movement in axial direction. The presence of pressurized fluid in the tool may therefore require a coupling force of several tens of kilograms, which prevents the user from establishing the connection.

For this reason, connection groups are known on the market that include decompression means on the lines to overcome these drawbacks.

An example of a hydraulic group comprising a plurality (typically two to four) female cartridges for connecting as many hydraulic lines is described in European Patent EP 2378177 B1 in the name of the same Applicant.

This hydraulic group is characterized in that it uses female hydraulic cartridges of the flat-faced type inserted into a group or manifold generally made of cast iron. The interaction of some components specifically provided on said female cartridges, and the internal surfaces of the seats of said cartridges obtained in the manifold, allows the lines to decompress and the oil to drain, thus lowering the pressure in the fluid.

Document US 2005/247359 A1 discloses a hydraulic connection system for fluid connection between hydraulic power lines and a drainage circuit, including a decompression system having a user-actuated decompression cartridge connected to the hydraulic lines via suitable fluid lines, according to the preamble of claim 1.

However, this known solution has some drawbacks.

Among these drawbacks, it should be noted that, in some more burdensome working conditions and only with specific equipment, it has occurred that the system can go into self-compression causing a malfunction of the connection group.

The cause of this behaviour is due to the movement of the pipes during work which, with very high forces, can induce the cartridges to retract inside the block, thus activating the decompression system.

Solutions are also known, e.g. from EP 2054635 B1, which instead of the female cartridges envisage the use within the manifold of single couplings inside a hydraulic group provided with a decompression system which, however, allows to decompress only one line at a time.

### SUMMARY OF THE INVENTION

In the light of the foregoing, the task of the present invention is to solve the drawbacks that afflict the hydraulic groups provided with a decompression system of a type known from the state of the art. Within this task, aim of the present invention is to provide a hydraulic connection group provided with an integrated decompression system that allows works for maintenance or replacement of the components to be carried out frontally, that is, without having to access the rear area of the manifold itself, which is difficult to access when the manifold is mounted on the operating machine.

Again, aim of the present invention is to provide a hydraulic connection group with integrated decompression system that can comprise three lines (two power and one drainage lines) or five lines (four power and one drainage lines).

Last but not least, aim of the present invention is to provide a hydraulic connection group with integrated decompression system that allows to use, in place of the cartridges, normal interchangeable flat-faced female couplings ISO 16028.

The task set out above, as well as the aforementioned purposes and others that will become clearer later, are achieved by a hydraulic connection group with integrated decompression system according to claim 1.

Other features of the hydraulic connection group with integrated decompression system according to the present invention are set forth in the dependent claims, which also form an integral part of the present disclosure.

### LIST OF FIGURES

Further features and advantages will become clearer from the description of preferred, but not exclusive, embodiments of the multi-connection hydraulic group according to the present invention, illustrated by way of non-limiting example with the aid of the accompanying drawings in which:

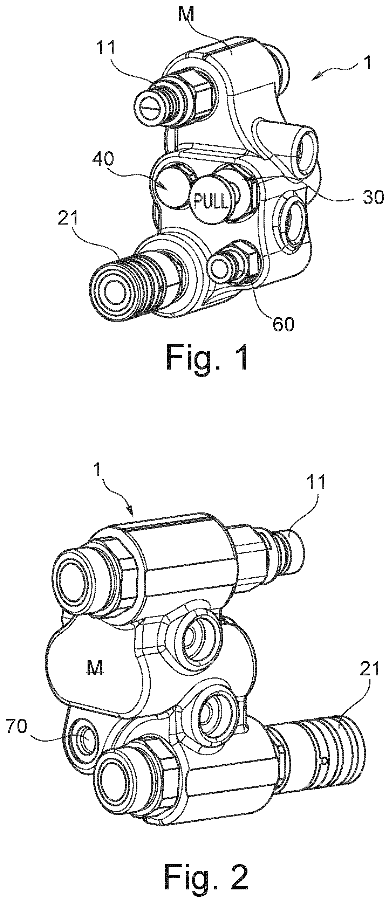

figure 1 shows an overall front perspective view of the connection hydraulic group in accordance with a preferred embodiment of the present invention;
figure 2 shows a rear perspective view of the connection hydraulic group in accordance with a preferred embodiment of the present invention;
figure 3 shows a side view in partial section of the connection hydraulic group in accordance with a preferred embodiment of the present invention;
figure 4A shows a sectional side view of the shutting cartridge according to the present invention, part of the decompression system, in accordance with a first preferred embodiment;

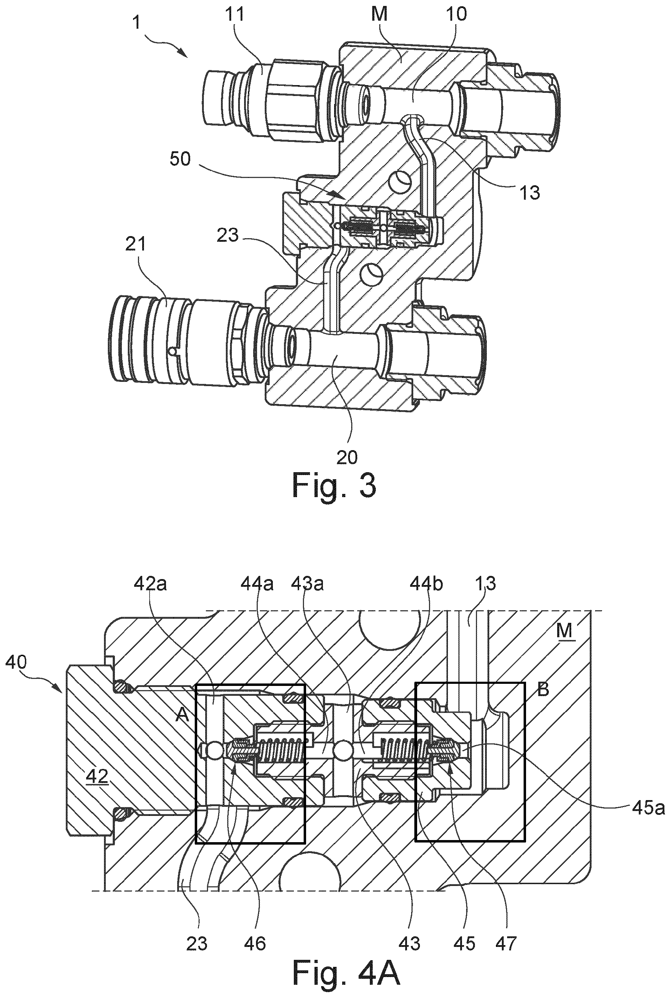

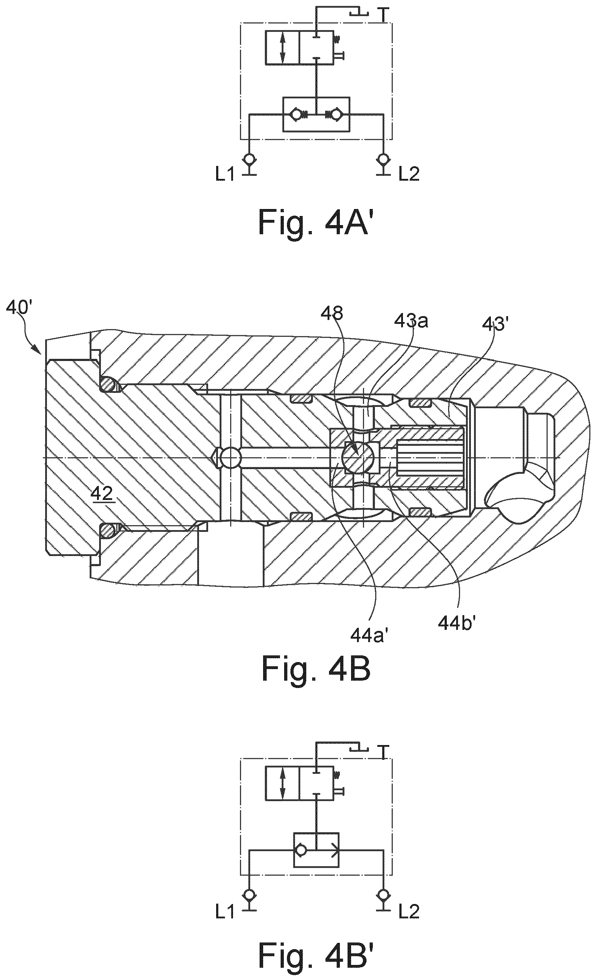

figure 4A' shows the hydraulic diagram of the system comprising the shutting valve according to the embodiment of figure 4A;
figure 4B shows a sectional side view of the shutting cartridge according to the present invention, part of the decompression system, in accordance with a second preferred embodiment;
figure 4B' shows the hydraulic diagram of the system comprising the shutting valve according to the embodiment of figure 4B;

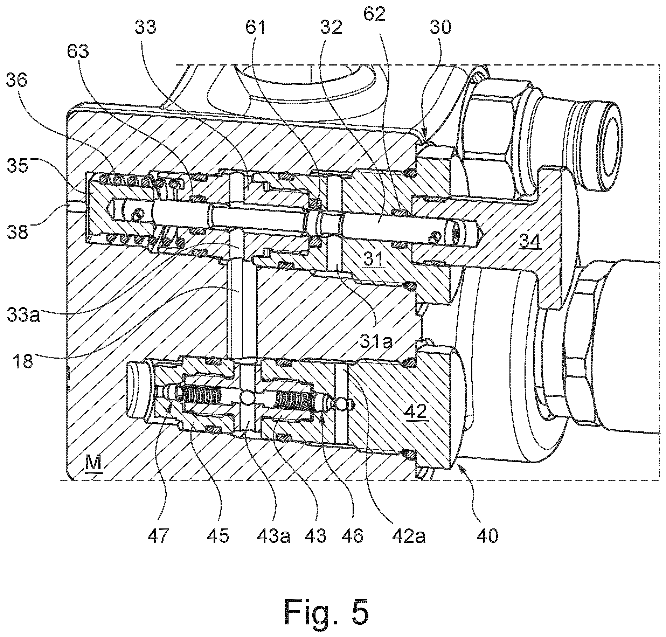

figure 5 shows a partial sectional perspective view of the shutting cartridge and of the decompression cartridge according to the present invention;

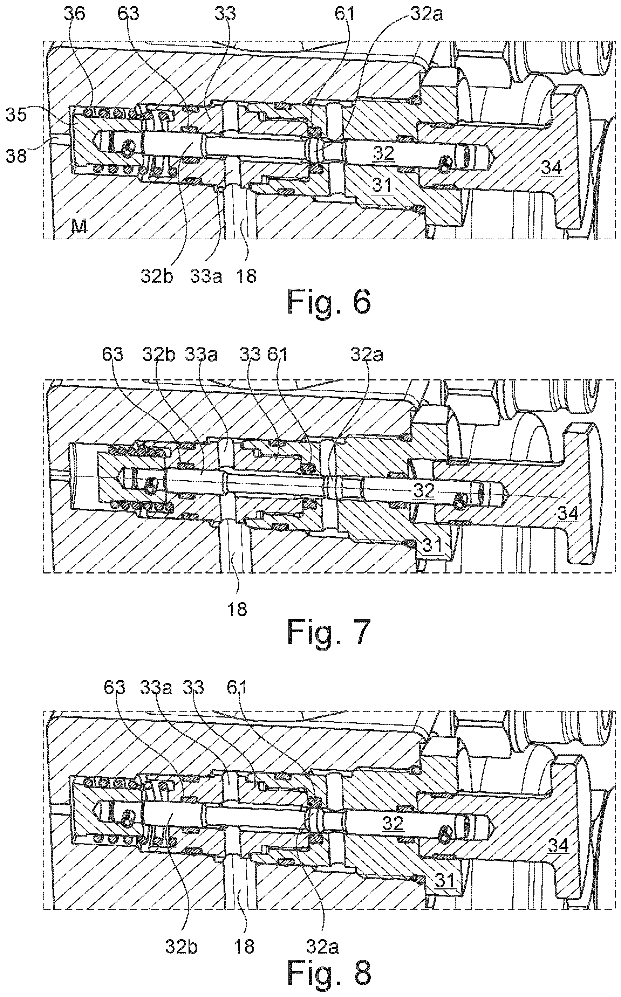

figures 6 to 8 show, in section, a view of the decompression cartridge according to the present invention in accordance with a first preferred embodiment respectively in the resting phase, in the extracted phase that allows the decompression of the system, and again in the resting phase;

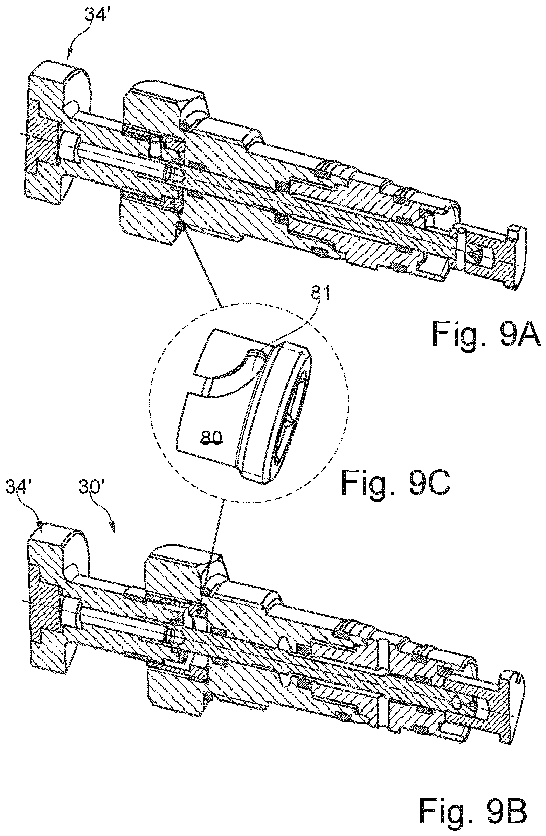

figures 9A, 9B show, in section, a view of the decompression cartridge according to the present invention in accordance with a second preferred embodiment respectively in the resting phase (Fig. 9A) and in the retracted decompression phase (Fig. 9B) which allows the decompression of the system; figure 9C shows a detail of a possible embodiment of a detail of the decompression cartridge of figures 9A and 9B.

### DETAILED DESCRIPTION OF THE INVENTION

With particular reference to the accompanying figures, the hydraulic connection group 1 according to the present invention is intended to be mounted on board an operating machine and allows the connection of several hydraulic power lines **10, 20** connected to the hydraulic circuit of said operating machine to the hydraulic lines of a utility by means of quick couplings **11, 21,** in particular preferably by means of interchangeable standard flat-faced quick couplings ISO 16028. This feature naturally offers the advantage of allowing the user to use the new block according to the present invention with any equipment provided with standard male flat-faced couplings, 1/2" sized (half inch) but also of other sizes, being able to insert in the hydraulic group 1, in particular in the manifold or block or casting **M,** generally but not exclusively made of cast iron, female flat-faced couplings of any size, depending on the customer's needs.

The hydraulic connection group **1** according to the present invention is provided with an integrated decompression system **50,** and comprises as mentioned a block or manifold **M** in which there are obtained several hydraulic power lines **10, 20** and suitable for receiving said quick couplings **11, 21.**

Advantageously, in the three-line blocks there can be two flat-faced quick couplings (one female and one male) for the power lines and one or two drainage lines, as will be described below, while in the case of five-line blocks, there will be four quick couplings (two females and two males) for the power lines and again one or two drainage lines.

For both the castings with three lines and those with five lines, the solution can still be customised according to the customer's needs.

The hydraulic group **1** according to the invention is characterized in that said decompression system **50** is suitable for making a fluid connection between said hydraulic power lines **10, 20** and one or more drainage lines **60, 70.**

Such drainage lines may advantageously comprise at least a first drainage line **60,** suitably provided with a connection with a small quick coupling for example 3/8"-sized (three eighths of an inch) for the connection to the drainage line of the equipment, and a second drainage line **70** for draining the oil towards the oil tank on board the machine.

For the purpose of realising the fluid connection between said hydraulic power lines **10, 20** and one or more drainage lines **60, 70,** the decompression system **50** according to the present invention comprises at least one "pull" type decompression cartridge **30,** that is, operable by the user by means of a front grip knob **34** which can be grasped by the operator, which is in hydraulic connection with said hydraulic power lines **10, 20** through hydraulic connection lines **13, 23.**

Furthermore, the decompression system **50** according to the present invention comprises a shutting cartridge **40, 40'** able to selectively place in fluid communication, through an internal drainage line **18,** each of said hydraulic connection lines **13, 23** with said decompression cartridge 30.

With reference, for example, to the accompanying figure 3, a hydraulic connection line **13** and **23** respectively branches off each hydraulic power line **10, 20.**

The function of the shutting cartridge **40, 40'** is to allow the passage of oil from the power line with higher pressure towards decompression, thus closing the oil passage of the power line with lower pressure and preventing the pressures within the lines themselves from "mixing" tending to balance.

More specifically, in accordance with a first preferred embodiment of the present invention shown in Figures 4A and 4A', said shutting cartridge **40** comprises a plurality of one-way valves **46, 47.**

Advantageously, said shutting cartridge **40** comprises at least one front body **42** for fixing the cartridge within a corresponding seat provided in said manifold **M** and comprising at least one inlet hole **42a** for the fluid coming from a first of said hydraulic connection lines **23,** a central body **43** integrally associated with said front body **42,** and a rear body 45 integrally associated with said central body **43** and in turn comprising at least one inlet hole **45a** for the entry of the fluid coming from a second of said hydraulic connection lines **13.**

The central body **43** in turn comprises at least one discharge channel **43a** in fluid connection with said drainage line **43,** and at least one collection channel **44a, 44b** of the fluid coming from each of said hydraulic connection lines **13, 23.** Said at least one collection channel **44a, 44b** of the fluid is in turn in fluid connection with the discharge channel **43a** provided on said central body **43.**

The front body **42** advantageously comprises a first one-way valve **46** placed between said inlet hole **42a** of the fluid coming from a first hydraulic connection line **23** and said collection channel **44a** provided on the central body **43.**

Similarly, the rear body **45** comprises a second one-way valve **47** placed between said inlet hole **45a** of the fluid coming from a second hydraulic connection line **13** and said collection channel **44b** provided on said central body **43.**

To give an example of the problem that arises in the decompression phase, assuming that the power line **10** (the upper one in figure 3) is the one with the highest pressure (for example 10 MPa) and the power line **20** (the lower one in figure 3) has the lowest pressure (for example 5 MPa). In this case, the oil, in addition to flowing in one direction or the other, will tend to run along the hydraulic connection lines **13, 23** that connect the power lines **10, 20** with the shutting cartridge **40.**

The shutting cartridge **40** is therefore composed of three bodies preferably obtained with a turning process: the front body **42,** the rear body **45,** and the central body **43.**

The front body **42** allows the cartridge to be fixed, by means of a thread, in a seat designed to allow the oil passages and to contain the hydraulic seals. This component advantageously also houses the sealing O-Ring **42c** that prevents the oil from leaking outwards, and contains the inlet hole **42a** for the passage of oil coming from the line **20** and the seat of the one-way valve **46.**

The central body **43** performs the function of guiding the one-way valves **46** and **47** in their opening movement (which results in the valves retracting in the direction of approach to the discharge channel **43a** visible in figure 4) so as to ensure that the passage of the oil is not obstructed.

At this point the oil can flow towards the discharge channel **43a** and through the internal drainage line **18,** reach the decompression cartridge **30.** With reference to figure 4A, there may be two different pressurized zones:
- the zone indicated with **A** that is at the pressure of the line **20** (lower) contained in the sealing O-Ring **42c** and the shaped polyurethane gasket **42d;**
- the zone **B** with the pressure of the line **10** (higher) contained in the shaped polyurethane gasket **43d.**

Since the pressure of the line **10** is higher, the valve **47** will open by letting oil pass towards the discharge channel **43a** which through the internal drainage line **18** leads to the decompression cartridge **30.**

Since the oil affects the entire collection channel **44a, 44b,** the same pressure will also act on the valve **46** keeping it closed, and avoiding pressure balancing between the lines.

In accordance with a second preferred embodiment illustrated by way of example in Figure 4B and in the diagram of Figure 4B', the shutting cartridge **40'** comprises a one-way ball seal valve, also commonly called a "shuttle valve".

With particular reference to Figure 4B, the ball seal shutting cartridge **40'** has the same structure as the shutting cartridge **40** with plurality of one-way valves **46, 47,** in which the function of the two one-way valves **46, 47** is however performed by a sealing ball **48** suitable to abut against sharp-edged openings obtained within the central body **43'** that houses the ball **48** and in which the collection channels **44a', 44b'** of the fluid are obtained. As can be seen from the observation of Figure 4B, the sealing ball **48** is adapted to abut against the sharp-edged mouth of the collection channels **44a', 44b'** of the fluid. The sealing ball **48** abuts against the mouth of the collection channel opposite to that from which the fluid under pressure arrives, freeing the discharge channel **43a.**

This second embodiment has the advantage of being particularly robust from the hydraulic point of view since the seal is guaranteed by the abutment of the sealing ball **48** against the mouth of the collection channels **44a', 44b'** of the fluid.

It should be in fact emphasized that under normal conditions of use of the hydraulic group according to the present invention it is not uncommon to reach oil pressures within the hydraulic circuit of the order of 350 bar, with flow rates affecting the hydraulic group that can reach 160 litres/minute.

The sections of passage of the shutting cartridge **40, 40'** in both embodiments shown herein are very small. To provide an exemplary indication, the diameter of the sealing ball **48** may be of the order of 3.5 mm, which as is understood owing to the reduced size of the passages leads to a flow rate concentration that results in a localized increase in fluid pressure and the occurrence of considerable stresses on the sealing elements of the entire system.

At a time when the decompression cartridge **30** is operated, by letting the oil flow towards the drainage line **70,** the pressure of the power line **10** will drop until it is lower than that of the line **20,** at which point the valve **46** will open and the valve **47** will close. This movement will occur until the pressure in the system is zeroed.

Decompression cartridge **30** operable by the user according to the present invention as visible in figures 6 to 8, it comprises a front connection body **31** for fixing the cartridge within a corresponding seat provided in said main body, or manifold, **M** and comprises at least one drain hole **31a** suitable for placing said decompression cartridge **30** in hydraulic connection with said drainage line **70,** a front grip knob 34 which can be grasped by the operator to which a shaped stem **32** is integrally associated, advantageously by means of a plug or similar connection element. In accordance with a first preferred embodiment of the decompression cartridge **30** according to the present invention, the front grip knob **34** can be grasped by the user and movable in the axial direction. Said shaped stem **32** is therefore also axially movable as a consequence of the movement of said front grip knob **34.**

In accordance with a second preferred embodiment of the present invention shown in Figures 9A, 9B and 9C, the decompression cartridge **30'** comprises a front grip knob **34'** which can be grasped by the operator and movable with a roto-translational movement, advantageously in that a guide bush **80** is provided which comprises a guide groove **81** advantageously configured according to a helical profile, as visible in Figure 9C, or L-shaped or the like.

This enhances the safety of the system since for the decompression cartridge **30'** to be operated the grip knob **34'** must be pulled and rotated by the operator. Also in this case, the movement of said front grip knob **34'** corresponds to a similar movement of the shaped stem **32.**

The need to perform a rotational movement of the grip knob **34'** to cause the stem **32** to translate helps to avoid the risk of inadvertent actuations of the decompression cartridge.

The decompression cartridge **30, 30'** further comprises a rear conveyor body **33** comprising in turn at least one discharge channel **33a** in fluid communication with said internal drainage line **18.**

The decompression cartridge **30, 30'** further comprises a rear bush **35** integrally associated with the shaped stem **32,** able to define a limit switch for the movement of said shaped stem **32** and supporting a helical spring **36** which acts between the rear bush **35** and the rear conveyor body **33** bringing back said bush **35,** and therefore the shaped stem **32** in position, when the operator releases said front grip knob **34.**

Advantageously, between the external surface of said shaped stem **32** and the internal surface of said rear conveyor body **33** and of said front connection body **31** sealing elements **61, 62, 63** are provided which are adapted to selectively allow the fluid coming from said internal drainage channel **18** and that through said discharge channel **33a** of said rear conveyor **33** to reach the drain hole **31a** of the front connection body **31** only when the shaped stem **32** is moved axially towards the front part of the manifold M as a consequence of the pulling towards the outside of said knob front socket **34** by the user.

Advantageously, said sealing elements **61, 62, 63** consist of a polyurethane gasket.

Advantageously, said manifold **M** further comprises a hole **38** obtained in correspondence with the seat that accommodates said bush **35** and which communicates said decompression cartridge directly with the external environment in order to allow the passage of air.

With particular reference to figures 6 to 9B, it is noted that by moving the central shaped stem **32,** following a pulling movement of the front grip knob **34,** the sealing areas of the stem indicated with **A1** and **A2** in figure 6 move, and which correspond to portions of the larger diameter portions **32a** and **32b,** with respect to the sealing gaskets **61** and **63,** until the stem is in the extracted position visible in figure 7 in which the gaskets **61** and **63** no longer contact the larger diameter portions **32a** and **32b,** consequently leaving the passage for the oil free.

As can be seen, in this decompression position where the grip knob **34** and the stem **32** are in the extracted position, the sealing gaskets **61** and **63** no longer exert a fluid seal on the larger diameter portions **32a** and **32b** of the stem **32** and the oil can flow towards the internal drainage line **18,** bringing the system pressure to zero.

In this condition it will be possible to connect and disconnect the quick couplings to connect the hydraulic lines without any problem.

Once the grip knob **34** is released, the entire system will return to the initial position, shown in figure 8, thanks to the rear helical spring **36** and will be ready to receive pressure again from the circuit of the operating machine.

Advantageously, as can be seen again in figures 6 to 8, and in particular in figure 7, the grip knob **34** also acts as a seat for a coloured band **34a,** preferably but not necessarily green, which has the function of visually warning the operator that the grip knob **34** has been correctly pulled until causing decompression, which has therefore occurred correctly. In fact, this visual warning device remains hidden by the front connection body **31** when the knob is normally closed and the system is in operation, and only becomes visible when the grip knob **34** is pulled all the way to the limit switch.

The same operation and the same movement of the internal components of the decompression cartridge 30' are visible with reference to Figures 9A and 9B.

It has thus been shown that the hydraulic connection group for connecting several hydraulic power lines by means of quick couplings and provided with an integrated decompression system according to the present invention allows to perform the task and achieve the purposes that the invention had set itself.

More particularly, it is understood from the description provided how the hydraulic connection group according to the present invention allows the decompression of the lines to be carried out manually so as to allow the connection of the couplings of the hydraulic lines without effort for the operator and in safe conditions.

The present invention has been described by way of a non-limiting illustrative example according to preferred embodiments thereof, however, it is understood that variations and/or modifications may be made by those skilled in the art, without thereby departing from the scope of protection, as defined in the accompanying claims.

## Claims

1. Hydraulic connection group (1) for connecting several hydraulic power lines (10, 20) by means of quick couplings (11, 21) comprising an integrated decompression system (50), including a manifold (M) in which are obtained several hydraulic power lines (10, 20) and suitable for receiving said quick couplings (11, 21), said decompression system (50) being suitable for making a fluid connection between said hydraulic power lines (10, 20) and one or more drainage lines (60, 70) and for this purpose comprising at least one decompression cartridge (30) that can be operated by the user and that is in hydraulic connection with said hydraulic power lines (10, 20) by means of hydraulic connection lines (13, 23), **characterized in that**, it further comprises at least one shutting cartridge (40, 40') able to selectively place in fluid communication through an internal drainage line (18) each of said hydraulic connection lines (13, 23) with said decompression cartridge (30).

2. Hydraulic group (1) according to the preceding claim, **characterized in that** said shutting cartridge (40) comprising a plurality of one-way valves (46, 47).

3. Hydraulic group (1) according to claim 1, **characterized in that** said shutting cartridge (40') comprising a one-way valve with sealing ball (48).

4. Hydraulic group (1) according to one or more of the preceding claims, **characterized in that** said shutting cartridge (40, 40') further comprises at least one front body (42) for fixing the cartridge within a corresponding seat provided in said main body (A) and comprising at least one inlet hole (42a) for the fluid coming from a first of said hydraulic connection lines (23), a central body (43, 43') integrally associated with said front body (42), and a rear body (45) integrally associated with said central body (43, 43 ') and in turn comprising at least one inlet hole (45a) for the fluid coming from a second of said hydraulic connection lines (13).

5. Hydraulic group (1) according to the preceding claim, **characterized in that** said throttle cartridge (40) comprises a central body (43) comprising at least one discharge channel (43a) in fluid connection with said drainage line (43), and at least one collection channel (44a, 44b) of the fluid coming from each of said hydraulic connection lines (13, 23) and in turn in fluid connection with said discharge channel (43a) of said central body (43).

6. Hydraulic group (1) according to the preceding claim, **characterized in that** said front body (42) comprises a first one-way valve (46) placed between said inlet hole (42a) of the fluid coming from a first of said hydraulic lines connection (23) and said collection channel (44a) provided on said central body (43), and by the fact that said rear body (45) comprises a second one-way valve (47) placed between said fluid inlet hole (45a) coming from a second of said hydraulic connection lines (13) and said collection channel (44b) provided on said central body (43).

7. Hydraulic group (1) according to one or more of the preceding claims, **characterized in that** said decompression cartridge (30, 30') that can be operated by the user comprises a front connection body (31) for fixing the cartridge within a corresponding seat provided in said main body (A) and comprising at least one drain hole (31a) suitable for placing said decompression cartridge (30, 30') in hydraulic connection with said drainage line (70), a front grip knob (34, 34') which can be grasped by the operator and movable in the axial direction to which a shaped central stem (32) is integrally associated, which is also axially movable as a consequence of the movement of said front grip knob (34, 34'), and a rear conveyor body (33) comprising in turn at least one discharge channel (33a) in fluid communication with said internal drainage line (18).

8. Hydraulic group (1) according to the preceding claim, **characterized in that** said decompression cartridge (30') comprises a front grip knob (34') that can be gripped by the operator and movable with a combined movement of rotation and translation in the axial direction.

9. Hydraulic unit (1) according to the preceding claim, **characterized in that** said decompression cartridge (30') comprises a guide bush (80) which comprises a guide groove (81) advantageously configured according to a helical or L profile.

10. Hydraulic group (1) according to one or more of the preceding claims, **characterized in that** said decompression cartridge (30, 30') further comprises a rear bush (35) integrally associated with said shaped stem (32), able to define a limit switch for the movement of said shaped stem (32) and supporting a helical spring (36) which acts between said rear bush (35) and said rear conveyor body (33) bringing back said bush (35), and therefore shaped stem (32), in position when the operator releases said front grip knob (34, 34').

11. Hydraulic group (1) according to one or more of the preceding claims, **characterized in that** between the external surface of said shaped stem (32) and the internal surface of said rear conveyor body (33) and of said front connection body (31) sealing elements (61, 62, 63) are provided which are adapted to selectively allow the fluid coming from said internal drainage channel (18) and that through said discharge channel (33a) of said rear conveyor (33) to reach said drain hole (31a) of said front connection body (31) only when the shaped stem (32) is moved axially towards the front part of the manifold (M) as a consequence of the pulling or rotation and pulling towards the outside of said knob front socket (34, 34') by the user.

12. Hydraulic group (1) according to the preceding claim, **characterized in that** said manifold (M) comprises a hole (38) obtained in the manifold in correspondence with the seat that accommodates said bush (35) and which communicates said decompression cartridge directly with the external environment in order to allow the passage of air.

13. Hydraulic group (1) according to one or more of the preceding claims, **characterized in that** said one or more drainage lines (60, 70) comprise at least a first drainage line (60) equipped with a coupling for connection to the line drainage of the equipment, and at least a second drainage line (70) for draining the oil towards the oil tank present on board the operating machine.

## Patentansprüche

1. Hydraulik-Verbindungsgruppe (1) zum Verbinden mehrerer Hydraulik-Energieleitungen (10, 20) mittels Schnellkupplungen (11, 21), umfassend ein integriertes Dekompressionssystem (50), das einen Verteiler (M) enthält, in dem mehrere Hydraulik-Energieleitungen (10, 20) erhalten sind und zur Aufnahme der Schnellkupplungen (11, 21) geeignet ist, wobei das Dekompressionssystem (50) geeignet ist, eine Fluidverbindung zwischen den Hydraulik-Energieleitungen (10, 20) und einer oder mehreren Drainageleitungen (60, 70) herzustellen, und zu diesem Zweck mindestens eine Dekompressionspatrone (30) umfasst, die vom Benutzer betätigt werden kann und die mit den Hydraulik-Energieleitungen (10, 20) mittels Hydraulik-Verbindungsleitungen (13, 23) in hydraulischer Verbindung steht, **dadurch gekennzeichnet, dass** sie ferner mindestens eine Absperrpatrone (40, 40') umfasst, die in der Lage ist, jede der Hydraulik-Verbindungsleitungen (13, 23) durch eine innere Drainageleitung (18) selektiv mit der Dekompressionspatrone (30) in Fluidkommunikation zu bringen.

2. Hydraulikgruppe (1) nach dem vorhergehenden Anspruch, **dadurch gekennzeichnet, dass** die Absperrpatrone (40) eine Vielzahl von Rückschlagventilen (46, 47) umfasst.

3. Hydraulikgruppe (1) nach Anspruch 1, **dadurch gekennzeichnet, dass** die Absperrpatrone (40') ein Rückschlagventil mit Dichtkugel (48) umfasst.

4. Hydraulikgruppe (1) nach einem oder mehreren der vorhergehenden Ansprüche, **dadurch gekennzeichnet, dass** die Absperrpatrone (40, 40') ferner mindestens einen vorderen Körper (42) zum Befestigen der Patrone in einem entsprechenden Sitz umfasst, der in dem Hauptkörper (A) vorgesehen ist und umfassend mindestens ein Einlassloch (42a) für das Fluid, das von einer ersten der Hydraulik-Verbindungsleitungen (23) kommt, einen zentralen Körper (43, 43'), der einstückig mit dem vorderen Körper (42) assoziiert ist, und einen hinteren Körper (45), der einstückig mit dem zentralen Körper (43, 43') assoziiert ist und seinerseits umfassend mindestens ein Einlassloch (45a) für das Fluid, das von einer zweiten der Hydraulik-Verbindungsleitungen (13) kommt.

5. Hydraulikgruppe (1) nach dem vorhergehenden Anspruch, **dadurch gekennzeichnet, dass** die Drosselpatrone (40) einen zentralen Körper (43) umfasst, der mindestens einen Abflusskanal (43a) in Fluidverbindung mit der Drainageleitung (43) und mindestens einen Sammelkanal (44a, 44b) des Fluids umfasst, das von jeder der Hydraulik-Verbindungsleitungen (13, 23) kommt und seinerseits in Fluidverbindung mit dem Abflusskanal (43a) des zentralen Körpers (43) steht.

6. Hydraulikgruppe (1) nach dem vorhergehenden Anspruch, **dadurch gekennzeichnet, dass** der vordere Körper (42) ein erstes Rückschlagventil (46) umfasst, das zwischen dem Einlassloch (42a) des Fluids, das von einer ersten der Hydraulik-Verbindungsleitungen (23) kommt, und dem Sammelkanal (44a), der an dem zentralen Körper (43) vorgesehen ist, angeordnet ist, und dadurch, dass der hintere Körper (45) ein zweites Rückschlagventil (47) umfasst, das zwischen dem Einlassloch (45a) des Fluids, das von einer zweiten der Hydraulik-Verbindungsleitungen (13) kommt, und dem Sammelkanal (44b), der an dem zentralen Körper (43) vorgesehen ist, angeordnet ist.

7. Hydraulikgruppe (1) nach einem oder mehreren der vorhergehenden Ansprüche, **dadurch gekennzeichnet, dass** die Dekompressionspatrone (30, 30'), die vom Benutzer betätigt werden kann, einen vorderen Verbindungskörper (31) zum Befestigen der Patrone in einem entsprechenden Sitz umfasst, der in dem Hauptkörper (A) vorgesehen ist und mindestens umfassend ein Ablassloch (31a), das geeignet ist, die Dekompressionspatrone (30, 30') in hydraulischer Verbindung mit der Drainageleitung (70) zu bringen, einen vorderen Griffknopf (34, 34'), der vom Bediener ergriffen werden kann und in der axialen Richtung beweglich ist, mit dem ein geformter zentraler Schaft (32) einstückig assoziiert ist, der auch als Folge der Bewegung des vorderen Griffknopfs (34, 34') axial bewegbar ist, und einen hinteren Fördererkörper (33), der wiederum mindestens einen Abflusskanal (33a) in Fluidkommunikation mit der inneren Drainageleitung (18) umfasst.

8. Hydraulikgruppe (1) nach dem vorhergehenden Anspruch, **dadurch gekennzeichnet, dass** die Dekompressionspatrone (30') einen vorderen Griffknopf (34') umfasst, der vom Bediener ergriffen werden kann und mit einer kombinierten Dreh- und Translationsbewegung in axialer Richtung bewegbar ist.

9. Hydraulikgruppe (1) nach dem vorhergehenden Anspruch, **dadurch gekennzeichnet, dass** die Dekompressionspatrone (30') eine Führungsbuchse (80) umfasst, die eine Führungsnut (81) umfasst, die vorteilhafterweise nach einem spiralförmigen oder L-Profil ausgelegt ist.

10. Hydraulikgruppe (1) nach einem oder mehreren der vorhergehenden Ansprüche, **dadurch gekennzeichnet, dass** die Dekompressionspatrone (30, 30') ferner eine hintere Buchse (35) umfasst, die einstückig mit dem geformten Schaft (32) assoziiert ist und eine Endlage für die Bewegung des geformten Schafts (32) definieren kann und eine spiralförmige Feder (36) trägt, die zwischen der hinteren Buchse (35) und dem hinteren Fördererkörper (33) wirkt und die Buchse (35) und damit den geformten Schaft (32) in Position zurückbringt, wenn der Bediener den vorderen Griffknopf (34, 34') loslässt.

11. Hydraulikgruppe (1) nach einem oder mehreren der vorhergehenden Ansprüche, **dadurch gekennzeichnet, dass** zwischen der Außenfläche des geformten Schafts (32) und der Innenfläche des hinteren Fördererkörpers (33) und des vorderen Verbindungskörpers (31) Dichtelemente (61, 62, 63) vorgesehen sind, die so angepasst sind, dass sie selektiv das aus dem inneren Drainagekanal (18) kommende Fluid und das durch den Abflusskanal (33a) des hinteren Förderers (33) strömende Fluid in das Ablassloch (31a) des vorderen Verbindungskörpers (31) gelangen lassen, und zwar nur dann, wenn der geformte Schaft (32) axial in Richtung des vorderen Teils des Verteilers (M) als Folge des Ziehens oder des Drehens und Ziehens nach außen an der vorderen Knopfbuchse (34, 34') durch den Benutzer bewegt wird.

12. Hydraulikgruppe (1) nach dem vorhergehenden Anspruch, **dadurch gekennzeichnet, dass** der Verteiler (M) ein Loch (38) umfasst, das in dem Verteiler an dem Sitz erhalten wird, der die Buchse (35) aufnimmt und die Dekompressionspatrone direkt mit der äußeren Umgebung kommunizieren lässt, um den Durchgang von Luft zu ermöglichen.

13. Hydraulikgruppe (1) nach einem oder mehreren der vorhergehenden Ansprüche, **dadurch gekennzeichnet, dass** die eine oder mehreren Drainageleitungen (60, 70) mindestens eine erste Drainageleitung (60), die mit einer Kupplung zur Verbindung mit der Drainageleitung der Ausrüstung ausgestattet ist, und mindestens eine zweite Drainageleitung (70) zum Ablassen des Öls in Richtung des an Bord der Arbeitsmaschine vorhandenen Öltanks umfassen.

## Revendications

1. Groupe de raccordement hydraulique (1) pour le raccordement de plusieurs conduites hydrauliques de puissance (10, 20) au moyen de raccords rapides (11, 21) comprenant un système de décompression intégré (50), incluant un collecteur (M) dans lequel sont obtenues plusieurs conduites hydrauliques de puissance (10, 20) et approprié pour la réception desdits raccords rapides (11, 21), ledit système de décompression (50) étant approprié pour l'établissement d'un raccordement fluidique entre lesdites conduites hydrauliques de puissance (10, 20) et une ou plusieurs conduites de vidange (60, 70) et comprenant à cet effet au moins une cartouche de décompression (30) qui peut être actionnée par l'utilisateur et qui est en raccordement hydraulique avec lesdites conduites hydrauliques de puissance (10, 20) au moyen de conduites hydrauliques de raccordement (13, 23), **caractérisé en ce qu'**il comprend en outre au moins une cartouche de coupure (40, 40') apte à placer sélectivement en communication fluidique, par l'intermédiaire d'une conduite de vidange interne (18), chacune desdites conduites hydrauliques de raccordement (13, 23) avec ladite cartouche de décompression (30).

2. Groupe hydraulique (1) selon la revendication précédente, **caractérisé en ce que** ladite cartouche de coupure (40) comprend une pluralité de clapets anti-retour (46, 47).

3. Groupe hydraulique (1) selon la revendication 1, **caractérisé en ce que** ladite cartouche de coupure (40') comprend un clapet anti-retour doté d'une bille d'étanchéité (48).

4. Groupe hydraulique (1) selon l'une ou plusieurs des revendications précédentes, **caractérisé en ce que** ladite cartouche de coupure (40, 40') comprend en outre au moins un corps avant (42) pour la fixation de la cartouche au sein d'un siège correspondant ménagé dans ledit corps principal (A) et comprenant au moins un trou d'entrée (42a) pour le fluide provenant d'une première conduite parmi lesdites conduites hydrauliques de raccordement (23), un corps central (43, 43') associé de manière solidaire audit corps avant (42), et un corps arrière (45) associé de manière solidaire audit corps central (43, 43') et comprenant à son tour au moins un trou d'entrée (45a) pour le fluide provenant d'une seconde conduite parmi lesdites conduites hydrauliques de raccordement (13).

5. Groupe hydraulique (1) selon la revendication précédente, **caractérisé en ce que** ladite cartouche d'étranglement (40) comprend un corps central (43) comprenant au moins un canal d'évacuation (43a) en raccordement fluidique avec ladite conduite de vidange (43), et au moins un canal de collecte (44a, 44b) du fluide provenant de chacune desdites conduites hydrauliques de raccordement (13, 23) et à son tour en raccordement fluidique avec ledit canal d'évacuation (43a) dudit corps central (43).

6. Groupe hydraulique (1) selon la revendication précédente, **caractérisé en ce que** ledit corps avant (42) comprend un premier clapet anti-retour (46) placé entre ledit trou d'entrée (42a) du fluide provenant d'une première conduite parmi lesdites conduites hydrauliques de raccordement (23) et ledit canal de collecte (44a) ménagé sur ledit corps central (43), et par le fait que ledit corps arrière (45) comprend un second clapet anti-retour (47) placé entre ledit trou d'entrée de fluide (45a) provenant d'une seconde conduite parmi lesdites conduites hydrauliques de raccordement (13) et ledit canal de collecte (44b) ménagé sur ledit corps central (43).

7. Groupe hydraulique (1) selon l'une ou plusieurs des revendications précédentes, **caractérisé en ce que** ladite cartouche de décompression (30, 30') qui peut être actionnée par l'utilisateur comprend un corps de raccordement avant (31) pour la fixation de la cartouche au sein d'un siège correspondant ménagé dans ledit corps principal (A) et comprenant au moins un trou de vidange (31a) approprié pour le placement de ladite cartouche de décompression (30, 30') en raccordement hydraulique avec ladite conduite de vidange (70), une poignée de préhension avant (34, 34') qui peut être saisie par l'opérateur et mobile dans la direction axiale à laquelle une tige centrale profilée (32) est associée de manière solidaire, qui est également axialement mobile en conséquence du mouvement de ladite poignée de préhension avant (34, 34'), et un corps de transporteur arrière (33) comprenant à son tour au moins un canal d'évacuation (33a) en communication fluidique avec ladite conduite de vidange interne (18).

8. Groupe hydraulique (1) selon la revendication précédente, **caractérisé en ce que** ladite cartouche de décompression (30') comprend une poignée de préhension avant (34') qui peut être saisie par l'opérateur et mobile avec un mouvement combiné de rotation et de translation dans la direction axiale.

9. Unité hydraulique (1) selon la revendication précédente, **caractérisée en ce que** ladite cartouche de décompression (30') comprend une douille de guidage (80) qui comprend une rainure de guidage (81) configurée de manière avantageuse selon un profil hélicoïdal ou en L.

10. Groupe hydraulique (1) selon l'une ou plusieurs des revendications précédentes, **caractérisé en ce que** ladite cartouche de décompression (30, 30') comprend en outre une douille arrière (35) associée de manière solidaire à ladite tige profilée (32), apte à définir une fin de course pour le mouvement de ladite tige profilée (32) et portant un ressort hélicoïdal (36) qui agit entre ladite douille arrière (35) et ledit corps de transporteur arrière (33) en ramenant ladite douille (35), et par conséquent la tige profilée (32), en position lorsque l'opérateur relâche ladite poignée de préhension avant (34, 34').

11. Groupe hydraulique (1) selon l'une ou plusieurs des revendications précédentes, **caractérisé en ce que**, entre la surface externe de ladite tige profilée (32) et la surface interne dudit corps de transporteur arrière (33) et dudit corps de raccordement avant (31), sont ménagés des éléments d'étanchéité (61, 62, 63) qui sont conçus pour sélectivement permettre au fluide provenant dudit canal de vidange interne (18) et à celui traversant ledit canal d'évacuation (33a) dudit transporteur arrière (33) d'atteindre ledit trou de vidange (31a) dudit corps de raccordement avant (31) uniquement lorsque la tige profilée (32) est déplacée axialement vers la partie avant du collecteur (M) en conséquence de la traction ou de la rotation et de la traction vers l'extérieur de ladite poignée de préhension avant (34, 34') par l'utilisateur.

12. Groupe hydraulique (1) selon la revendication précédente, **caractérisé en ce que** ledit collecteur (M) comprend un trou (38) obtenu dans le collecteur en correspondance avec le siège qui loge ladite douille (35) et qui met en communication ladite cartouche de décompression directement avec l'environnement extérieur afin de permettre le passage d'air.

13. Groupe hydraulique (1) selon l'une ou plusieurs des revendications précédentes, **caractérisé en ce que** lesdites une ou plusieurs conduites de vidange (60, 70) comprennent au moins une première conduite de vidange (60) équipée d'un raccord pour un raccordement à la conduite de vidange de l'équipement, et au moins une seconde conduite de vidange (70) pour la vidange de l'huile vers le réservoir d'huile présent à bord de la machine de travail.
